(19) Europäisches Patentamt
European Patent Office
Office européen des brevets

(11) **EP 2 650 655 B1**

(12) **EUROPÄISCHE PATENTSCHRIFT**

(45) Veröffentlichungstag und Bekanntmachung des Hinweises auf die Patenterteilung:
**03.09.2014   Patentblatt 2014/36**

(51) Int Cl.:
**G01D 5/347** *(2006.01)*   **G01D 5/38** *(2006.01)*

(21) Anmeldenummer: **12163839.9**

(22) Anmeldetag: **12.04.2012**

(54) **Messwertgeber zum Erhalt einer Positionsinformation**

Data encoder for receiving position information

Dispositif d'établissement de valeurs de mesure pour obtenir une information de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.10.2013   Patentblatt 2013/42**

(73) Patentinhaber: **Siemens Aktiengesellschaft
80333 München (DE)**

(72) Erfinder:
• **Finkler, Roland
91058 Erlangen (DE)**
• **Schwesig, Günter
91054 Erlangen (DE)**

(56) Entgegenhaltungen:
**EP-A1- 0 220 757        DE-A1-102004 002 683
DE-A1-102006 009 747**

EP 2 650 655 B1

**EP 2 650 655 B1**

**Beschreibung**

Die Erfindung betrifft einen Messwertgeber zum Erhalt einer Positionsinformation. Als Positionsinformation werden dabei absolute und/oder inkrementelle Positionsinformationen verstanden. Solche Messwertgeber sind an sich bekannt. Exemplarisch kann auf sogenannte Inkrementalgeber verwiesen werden.

Der hier zu beschreibende Messwertgeber basiert auf einer optischen Abtastung einer Maßverkörperung. Dies ist zum Beispiel bei Inkrementalgebern ebenfalls bekannt.

Die EP 1 677 081 B1 schlägt die Verwendung einer diffraktiv wirkenden Maßverkörperung für einen Messwertgeber auf der Basis computergenerierter Hologramme (CGH) zum Erhalt einer absoluten Positionsinformation vor.

Für die Generierung von Inkrementalsignalen werden allerdings als Maßverkörperung Streifenmuster (grating) verwendet. In der Veröffentlichung "Absolutkodierung für einen diffraktiven optischen Drehgeber" von David Hopp et al. in DGaO Proceedings 2011 findet sich dazu die Beschreibung, dass durch gaußförmige Beleuchtung von normalerweise vier verschiedenen, periodisch angeordneten Beugungsgittern, die häufig mit A, B, *A, *B oder Ähnlichem bezeichnet werden, und der Detektion der Intensitätsmodulation der ersten Beugungsordnungen zwei um n/2 phasenversetzte, sinusartige Differenzsignale erzeugt werden. Unterschiedliche laterale Gitterwinkel sorgen dabei für eine räumliche Separation der Beugungsordnungen. Eine solche Generierung von Inkrementalsignalen ist auch in dem unter dem Titel "Untersuchungen zu einem hochauflösenden optischen Drehwinkelsensor in Low-Cost-Bauweise" veröffentlichten und vom Institut für Mikroaufbautechnik der Hahn-Schickard-Gesellschaft (HSG-IMAT), Stuttgart und dem Institut für Technische Optik der Universität Stuttgart (ITO) herausgegebenen Abschlussbericht aus dem Jahre 2008 beschrieben.

Solche Streifenmuster werden auch in der DE 10 2006 009 747 A und der DE 10 2004 002 683 A verwendet. Bei der DE 10 2006 009 747 A wird das Streifenmuster durch abwechselnd mikrostrukturierte und unstrukturierte Felder gebildet. Die strukturierten Felder umfassend Unterfelder mit unterschiedlichen Gitterkonstanten und eine Intensität der optischen Interferenz soll außer durch die Geometrie der Mikrostruktur auch noch durch das Flächenverhältnis der Mikrostrukturen zur eigentlichen Scheibenoberfläche innerhalb eines strukturierten Kodierungsfeldes festgelegt sein.

Eine Aufgabe der Erfindung besteht darin, eine alternative Ausführungsform eines Messwertgebers oder eine alternative Ausführungsform einer Maßverkörperung für einen solchen Messwertgeber anzugeben, und die Möglichkeiten zum Erhalt von inkrementellen Positionsinformationen zu verbessern.

Diese Aufgabe wird erfindungsgemäß mit einem Messwertgeber mit den Merkmalen des Anspruchs 1 gelöst. Dazu ist bei einem Messwertgeber kurz gefasst die Verwendung von computergenerierten Hologrammen (CGH) auch für die Generierung von Inkrementalsignalen vorgesehen. Konkret ist bei einem Messwertgeber zum Erhalt einer Positionsinformation, wobei mit einer Sende- / Empfangseinheit eine Maßverkörperung abgetastet wird und wobei die Maßverkörperung diffraktiv wirkende mikrostrukturierte Felder umfasst, insbesondere vorgesehen, dass die Maßverkörperung zur Ableitung von Inkrementalsignalen zumindest eine Spur mit computergenerierten Hologrammen (CGH) umfasst.

Wenn hier und im Folgenden von einer Sende- / Empfangseinheit die Rede ist, zielt dies im Wesentlichen auf eine sprachlich knappe Darstellung ab. Von dem Begriff Sende-/Empfangseinheit sollen gleichwohl auch Einrichtungen mit räumlich voneinander getrennten Sende- und Empfangsteilen umfasst sein, wie dies zum Beispiel der Fall ist, wenn an der Maßverkörperung keine Reflektion, sondern eine Transmission des von dem Sendeteil ausgesandten Lichts, insbesondere Laserlichts, stattfindet.

Der Vorteil der Erfindung besteht darin, dass mit der Verwendung von computergenerierten Hologrammen zur Ableitung von Inkrementalsignalen eine verbesserte Kurvenform und damit ein kleinerer Positionsfehler erwartet wird. Die Verwendung von computergenerierten Hologrammen zur Ableitung von Inkrementalsignalen bedeutet dabei die Verwendung von computergenerierten Hologrammen zur Bildung der zur Ableitung von Inkrementalsignalen vorgesehenen Spur innerhalb der jeweiligen Maßverkörperung, also der sogenannten Inkrementalspur.

Dabei ist vorgesehen, dass die Maßverkörperung zumindest eine Spur (Inkrementalspur) mit einer alternierenden Abfolge von jeweils paarig zusammengehörigen Feldern, insbesondere paarig zusammengehörigen gleich großen Feldern, mit computergenerierten Hologrammen umfasst. Zwei paarig zusammengehörige Felder mit computergenerierten Hologrammen wirken damit ähnlich wie zwei Felder eines bisherigen Streifenmusters. Ein derartiges Feld kann entweder genau ein computergeneriertes Hologramm oder eine Mehrzahl von computergenerierten Hologrammen umfassen. Bei einer Mehrzahl computergenerierter Hologramme sind diese üblicherweise matrixartig angeordnet. Im Falle mehrerer CGHs pro Feld können diese CGHs auch als Sub-CGHs eines (übergeordneten) CGHs aufgefasst werden, welches dem Feld entspricht. Dieses übergeordnete CGH kann gedanklich auch erst nachträglich in eine Mehrzahl von Sub-CGHs aufgeteilt werden.

Jeweils ein Paar zusammengehöriger Felder stellt damit ein Inkrement der Maßverkörperung dar und bei einer besonderen Ausführungsform sind eine Dimension der Felder sowie eine Anordnung einer als Sender fungierenden Strahlquelle, gegebenenfalls zusammen mit einer Optik, so aufeinander abgestimmt, dass ein Durchmesser eines von der Strahlquelle der Sende-/ Empfangseinheit ausgehenden Abtaststrahls im Bereich einer in Bewegungsrichtung der Maßverkörperung gemessenen hälftigen Längserstreckung jeweils eines Paars solcher Felder liegt. Dann erfasst der Abtaststrahl zu einem bestimmten Zeitpunkt genau eines der Felder und dessen computergenerierte Hologramme. Bei einer Bewegung der Maßverkörperung, zum Beispiel auf einer rotierenden Scheibe, existieren demnach zumindest eine Orientierung der Scheibe und ein zugehöriger Zeitpunkt, bei dem der Abtaststrahl nur das jeweilige Feld trifft und benachbarte Felder durch den Abtaststrahl nicht oder nur in vernachlässigbar kleinem Umfang beleuchtet werden. Bei einer Relativbewegung des Abtaststrahls in Bezug auf die innerhalb der Maßverkörperung aufeinander folgenden Felder überstreicht der Abtaststrahl dann weitere Felder, aber eine zentrale Position über genau einem Feld bleibt erkennbar. Dann ergibt sich nämlich für ein resultierendes Inkrementalsignal nach Erfassung des aufgrund der abgetasteten computergenerierten Hologramme entstehenden Beugungsmusters ein Maximum oder Minimum. Bei einer fortschreitenden Relativbewegung von Abtaststrahl und Maßverkörperung verlässt der Abtaststrahl nach und nach das zunächst vollständig erfasste Feld und erfasst dabei zunehmend auch Abschnitte des innerhalb der Maßverkörperung nachfolgenden Feldes. Eine Amplitude des resultierenden Inkrementalsignals geht damit von dem ursprünglichen Extremwert zurück, bis sich bei einer vollständigen Erfassung des sukzessiv stärker erfassten Nachbarfeldes für das resultierende Inkrementalsignal ein Minimum bzw. Maximum ergibt. Dies setzt sich fort, so dass sich insgesamt als Inkrementalsignal ein periodisches Signal ergibt.

Des Weiteren sind die Verteilung und Anordnung der computergenerierten Hologramme im Hinblick auf eine möglichst gute Approximation eines idealen sinusförmigen Inkrementalsignals als Beispiel für ein besonders gut verarbeitbares und auswertbares periodisches Signal optimiert.

Dabei ist vorgesehen, dass innerhalb der Maßverkörperung jedes Feld eine Mehrzahl jeweils gleichartiger computergenerierter Hologramme umfasst. Gleichartig bedeutet hier und im Folgenden nicht notwendig vollkommen identisch, sondern in vielen Fällen nur ähnlich.

Die computergenerierten Hologramme sind dabei entweder einem ersten oder einem zweiten Typ, im Folgenden als CGHO und CGH1 bezeichnet, zugehörig und jedes Feld umfasste eine Mehrzahl derartiger computergenerierter Hologramme, insbesondere in einer matrixartigen Struktur. Jedes Feld kann darüber hinaus auch computergenerierte Hologramme weiterer Typen umfassen, wichtig sind jedoch zumindest zwei unterscheidbare Typen. Dann besteht die Möglichkeit, die Anordnung und Verteilung der computergenerierten Hologramme so zu wählen, dass die Randbereiche der einzelnen und untereinander jeweils paarig zusammengehörigen Felder durch die dort jeweils vorgesehenen computergenerierten Hologramme so angelegt sind, dass sich hinsichtlich des resultierenden Inkrementalsignals ein möglichst kontinuierlicher Signalverlauf ergibt. Konkret ist die Anordnung und Verteilung der zumindest zwei Typen computergenerierter Hologramme zum Beispiel so gewählt, dass jedes Feld in einem mittleren Abschnitt ausschließlich oder zumindest mehrheitlich nur computergenerierte Hologramme des ersten Typs (CGHO) oder des zweiten Typs (CGH1) umfasst. In diesem mittleren Abschnitt wirkt das Feld also genauso wie jeweils eines der weiter oben beschriebenen Felder, bei denen jedes jeweils gleichartige computergenerierte Hologramme umfasst. Im Gegensatz dazu ist hier vorgesehen, dass jedes Feld in jeweils einem in Bewegungsrichtung der Maßverkörperung vor bzw. hinter dem mittleren Abschnitt liegenden Abschnitt (seitliche Abschnitte) eine gleiche oder annähernd gleiche Anzahl der computergenerierten Hologramme des ersten Typs (CGH0) und des zweiten Typs (CGH1) umfasst. Diese seitlichen Abschnitte führen also im Vergleich zu einem Feld mit durchgängig gleichartigen computergenerierten Hologrammen, zum Beispiel computergenerierten Hologrammen des zweiten Typs CGH1, zu einem Beugungsmuster, das in etwa einer Überlagerung zweier Beugungsmuster entspricht, nämlich erstens eines Beugungsmusters, wie es von einem Feld mit durchgängig gleichartigen computergenerierten Hologrammen des Typs CGHO erzeugt werden würde und zweitens eines Beugungsmusters, wie es von einem Feld mit durchgängig gleichartigen computergenerierten Hologrammen des Typs CGH1 erzeugt werden würde. Dies eröffnet die Möglichkeit, der Tatsache Rechnung zu tragen, dass ein mit der Sende-/Empfangseinheit generierter Abtaststrahl beim Auftreffen auf die Maßverkörperung üblicherweise eine kreisförmige oder elliptische Kontur hat, die bei einer entsprechenden Ausrichtung des Laserstrahls auf die Spur mit den computergenerierten Hologrammen in einem mittleren Abschnitt der von der Spur umfassten Felder seine größte Ausdehnung hat, während diese Ausdehnung in Richtung der seitlichen Abschnitte der Felder abnimmt. Bei einer üblicherweise rechteckigen Kontur der einzelnen Felder einer solchen Spur wäre eine auf die Geometrie der Felder abgestimmte Beleuchtung günstig, was sich zum Beispiel durch eine geeignete Optik, nämlich insbesondere eine Blende oder dergleichen, grundsätzlich erreichen lässt. Indem jedes Feld innerhalb der Spur mit computergenerierten Hologrammen in den seitlichen Abschnitten, also dort wo für den auftreffenden Laserstrahl mit dessen größter Breite im Hinblick auf die Bewegungsrichtung der Maßverkörperung gerechnet wird, eine gleiche oder annähernd gleiche Anzahl computergenerierter Hologramme des ersten und des zweiten Typs umfasst, gelingt quasi ohne eine solche Blende die Kompensation der unterschiedlichen Ausmaße der Beleuchtung der Maßverkörperung. Dies erlaubt eine bessere Annäherung des resultierenden Inkrementalsignals an eine ideale Sinusform und vermeidet zum Beispiel die Notwendigkeit der Verwendung einer Blende oder dergleichen, mit der eine solche bessere Annäherung an eine ideale Sinusform gegebenenfalls ebenfalls erreichbar wäre.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Trotz der oben beschriebenen Möglichkeit, eine gute Approximation eines idealen sinusförmigen Signals durch eine geeignete Verteilung und Anordnung der computergenerierten Hologramme innerhalb der Maßverkörperung zu erreichen, kommt dennoch auch die Verwendung einer Optik, insbesondere einer Blende, also normalerweise einer Rechteckblende oder dergleichen, zusätzlich oder alternativ zur Beeinflussung eines von der Sende- / Empfangseinheit ausgehenden Abtaststrahls im Hinblick auf eine möglichst gute Approximation eines idealen sinusförmigen Signals in Betracht.

Die Verwendung von computergenerierten Hologrammen zur Kodierung von Inkrementalinformationen erlaubt auch die bisher übliche Generierung von phasenverschobenen und komplementären Inkrementalsignalen, die in der Literatur üblicherweise mit A, *A, B, *B bezeichnet sind, so dass bei einer besonderen Ausführungsform des hier beschriebenen Messwertgebers dessen Maßverkörperung mehrere Spuren mit computergenerierten Hologrammen umfasst, insbesondere zwei oder vier Spuren mit computergenerierten Hologrammen.

Eine solche Mehrzahl von Spuren mit computergenerierten Hologrammen lässt sich dabei in unterschiedlicher Art und Weise zusammenfassen und ineinander verschachteln. Denkbar und sinnvoll ist insofern zum Beispiel, dass die Maßverkörperung eine Mehrzahl von jeweils radial angeordneten Gruppen mit zwei oder vier Spuren mit computergenerierten Hologrammen umfasst.

Wenn mittels der Sende-/Empfangseinheit des Messwertgebers zumindest zwei Abtaststrahlen generierbar sind, besteht die Möglichkeit, dass mit jedem Abtaststrahl zumindest eine Spur mit computergenerierten Hologrammen erfasst wird, also zum Beispiel mit einem ersten Abtaststrahl zumindest eine Absolutspur und mit einem zweiten Abtaststrahl zumindest eine Inkrementalspur.

Wenn in einer Spur mit computergenerierten Hologrammen zumindest zwei periodische Signale, insbesondere genau zwei periodische Signale oder genau vier periodische Signale, kodiert sind, reicht die Erfassung einer solchen Spur aus, um zum Beispiel als Positionsinformation Inkrementalinformationen abzuleiten. Eine Verwendung mehrerer Strahlquellen zur gleichzeitigen Abtastung mehrerer Spuren ist damit nicht mehr nötig.

Bei einer besonderen Ausführungsform eines Messwertgebers mit mehreren Spuren mit computergenerierten Hologrammen ist vorgesehen, dass in ein und derselben Spur mit computergenerierten Hologrammen zumindest zwei periodische Signale, insbesondere genau zwei periodische Signale oder genau vier periodische Signale, kodiert sind. Dies eröffnet die Möglichkeit, mit zwei Spuren mit computergenerierten Hologrammen zum Beispiel mit einer ersten dieser beiden Spuren gleichzeitig das A-Signal und das *A-Signal sowie das B-Signal und das *B-Signal zu erzeugen. Andere Kombinationen, also zum Beispiel A/B, *A/*B, und so weiter sind ebenfalls denkbar. Wenn in einer Spur mit computergenerierten Hologrammen genau vier periodische Signale kodiert sind, gelingt mit einer solchen Spur die gleichzeitige Erzeugung der A-, *A-, B-, *B-Signale. Der Vorteil einer solchen Kodierung mehrerer periodischer Signale in ein und derselben Spur liegt in dem Platzgewinn auf dem Träger der jeweiligen Maßverkörperung. Eine Kodierung mehrerer periodischer Signale innerhalb der gleichen Spur mit computergenerierten Hologrammen gelingt zum Beispiel durch die Verwendung von computergenerierten Hologrammen mit unterschiedlicher Beugungscharakteristik, so dass für eine Kodierung von zum Beispiel zwei periodischen Signalen jedes Feld der abgetasteten Spur computergenerierte Hologramme mit einer ersten Beugungscharakteristik und computergenerierte Hologramme mit einer zweiten Beugungscharakteristik umfasst. Dies wird weiter unten anhand einer graphischen Darstellung und im Zusammenhang mit dem Stichwort "Ablenkungs- und Auffächerungswirkung" näher erläutert. Die resultierende Beugung des transmittierten oder reflektierten Abtaststrahls kann dann mit beabstandet voneinander angeordneten Detektoren oder dergleichen erfasst werden, so dass jeder Detektor zu dem jeweils kodierten Signal einen entsprechenden Signalverlauf generiert.

Insgesamt betrifft die Erfindung damit auch die Verwendung von computergenerierten Hologrammen zur Kodierung von Inkrementalinformationen wie hier und nachfolgend beschrieben.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Änderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1    eine schematisch vereinfachte Darstellung eines Messwertgebers,
FIG 2    eine von einem Messwertgeber gemäß FIG 1 auswertbare Inkrementalspur mit computergenerierten Hologrammen,
FIG 3    eine Inkrementalspur mit computergenerierten Hologrammen ähnlich wie in FIG 2, jedoch mit einer optimierten Anordnung der hier dargestellten zwei Typen computergenerierter Hologramme,

FIG 4     eine vereinfachte Darstellung eines Messwertgebers wie in FIG 1 zur Verdeutlichung des Aspekts der durch die computergenerierten Hologramme möglichen Auffächerung (Ablenkungs- und Auffächerungswirkung) des Strahlgangs,

FIG 5     eine als Träger einer Maßverkörperung aus computergenerierten Hologrammen fungierende Scheibe mit mehreren Spuren mit computergenerierten Hologrammen und

FIG 6     eine Scheibe wie in FIG 5 mit einer gruppierten Anordnung mehrerer Spuren mit computergenerierten Hologrammen.

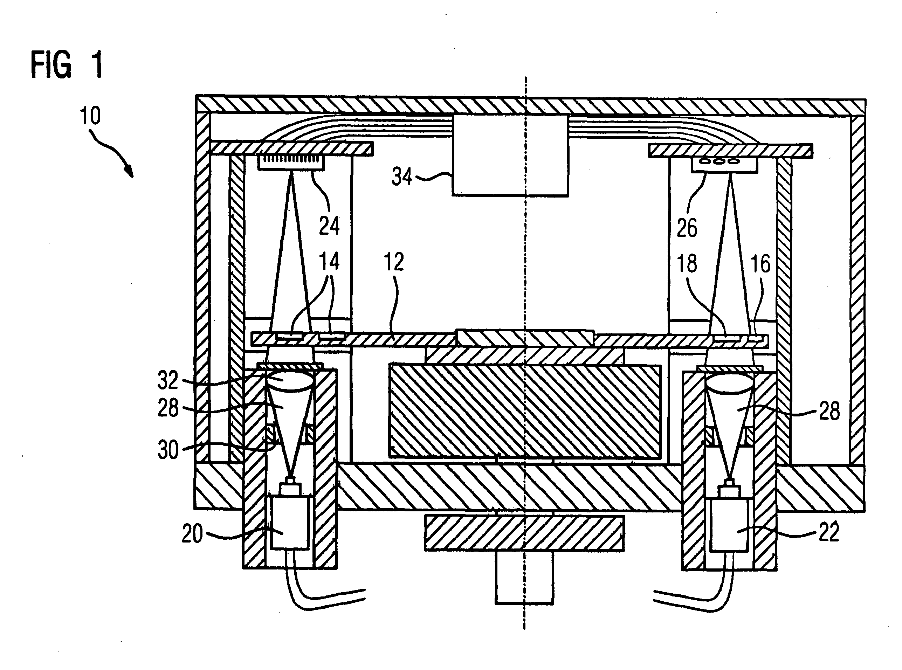

FIG 1 zeigt in einer teilweise geschnittenen Darstellung eine schematisch vereinfachte Darstellung eines Messwertgebers 10 zum Erhalt einer Positionsinformation. Der Messwertgeber 10 umfasst eine hier verteilt ausgeführte Sende-/ Empfangseinheit. Mit dieser wird eine hier auf einer rotierenden Scheibe 12 befindliche Maßverkörperung 14 abgetastet. Die Maßverkörperung 14 umfasst hier zwei sogenannte Spuren, nämlich eine Absolutspur 16 und eine Inkrementalspur 18.

Zur Abtastung der Absolutspur 16 und der Inkrementalspur 18 realisiert der dargestellte Messwertgeber 10 einen Absolutkanal und einen Inkrementalkanal. Zu jedem dieser beiden Kanäle gehören ein Sender 20, 22 als Quelle für kohärentes Licht, also beispielsweise eine als Sender 20, 22 fungierende Laserdiode, und ein als Empfänger fungierender Detektor 24, 26. Die Maßverkörperung 14 wird jeweils mit einem vom Sender 20, 22 ausgehenden Abtaststrahl 28 abgetastet und eine Reflexion oder Transmission des Abtaststrahls 28 wird vom Detektor 24, 26 empfangen. Der oder jeder Detektor 24, 26 detektiert das aufgrund der Maßverkörperung 14 und der Reflexion oder Transmission des Abtaststrahls 28 an der Maßverkörperung 14 entstehende Beugungsmuster. Bei der in FIG 1 dargestellten Anordnung gehören Sender 20, Absolutspur 16 und Detektor 24 zum Absolutkanal, während Sender 22, Inkrementalspur 18 und Detektor 26 zum Inkrementalkanal gehören.

Zumindest der oder jeder Sender 20, 22, gegebenenfalls zusammen mit einer im Strahlgang anschließenden Optik 30, 32, bildet das gegebenenfalls auch räumlich verteilte Sendeteil der Sende-/Empfangseinheit. Entsprechend bildet zumindest der oder jeder Detektor 24, 26 den zugehörigen Empfangsteil der Sende-/Empfangseinheit.

Die Abtastung der Maßverkörperung 14 erfolgt bei der dargestellten Ausführungsform durch Transmission, so dass sich Sender 20, 22 und Detektor 24, 26 auf unterschiedlichen Seiten der die Maßverkörperung 14 tragenden Scheibe 12 befinden. Im Falle einer ebenfalls möglichen Abtastung der Maßverkörperung 14 durch Reflexion befinden sich Sender 20, 22 und Detektor 24, 26 auf derselben Seite der Scheibe 12. Dann ist eine Anordnung der zur Sende-/Empfangseinheit gehörigen Komponenten, nämlich des oder jedes Senders 20, 22 und des oder jedes Detektors 24, 26, räumlich nahe beieinander möglich, so dass die Sende-/Empfangseinheit auch als räumliche Einheit wahrnehmbar ist. Bei der in FIG 1 dargestellten Situation umfasst die Sende-/Empfangseinheit räumlich verteilte Komponenten, nämlich zwei Sender 20, 22 und zwei Detektoren 24, 26. Trotz der räumlichen Verteilung wird die Gesamtheit dieser Komponenten sowie eine eventuelle Optik, von der in FIG 1 jeweils zumindest eine Blende 30 und eine Linse 32 zur Fokussierung des Laserlichts dargestellt sind, und eine Auswerteelektronik 34, die von dem oder jedem Detektor 24, 26 generierte Signale entsprechend der Abtastung der Maßverkörperung 14 empfängt und auswertet, als Sende-/Empfangseinheit bezeichnet.

Die Maßverkörperung 14 umfasst diffraktiv wirkende mikrostrukturierte Felder. Dabei umfasst die Absolutspur 16 als diffraktiv wirkende mikrostrukturierte Felder eine Abfolge von sogenannten computergenerierten Hologrammen, die im Folgenden entsprechend der üblichen Fachterminologie mitunter kurz auch nur als CGH oder in der Mehrzahl als CGHs (computer generated hologram(s)) bezeichnet werden. Bei im Stand der Technik bekannten Messwertgebern 10 umfasst die Inkrementalspur 18 als diffraktiv wirkende mikrostrukturierte Felder ein periodisches Streifenmuster, also keine computergenerierten Hologramme. Ein solches Streifenmuster wird in der Fachterminologie auch als linear grating bezeichnet.

Ein Messwertgeber 10 kann auch mit nur einem Kanal, also zum Beispiel nur einem Absolutkanal oder nur einem Inkrementalkanal, realisiert sein, so dass die Beschreibung anhand eines Messwertgebers 10 mit einem Absolutkanal und einem Inkrementalkanal nicht als Einschränkung und Verzicht auf eine weitergehende Allgemeingültigkeit zu verstehen ist.

Der Absolutteil oder Absolutkanal eines Messwertgebers 10 gemäß FIG 1 ist in der EP 1 677 081 B1 beschrieben. Im Folgenden geht es dementsprechend im Wesentlichen um den Inkrementalteil / Inkrementalkanal eines solchen Messwertgebers 10 oder eine entsprechende Funktionalität eines Messwertgebers 10, der nur einen Inkrementalkanal und keinen Absolutkanal umfasst.

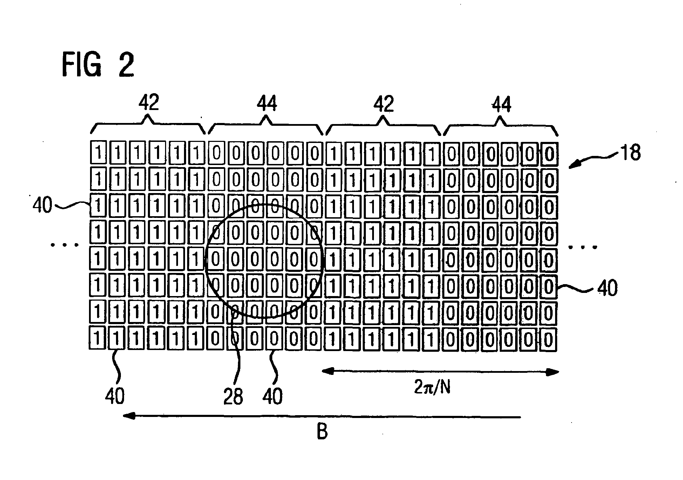

Für den Inkrementalteil / Inkrementalkanal des hier vorgeschlagenen Messwertgebers 10 ist vorgesehen, dass auch der zur Ableitung von Inkrementalsignalen vorgesehene Teil der Maßverkörperung 14, also die Inkrementalspur 18 oder eine Mehrzahl von Inkrementalspuren, mikrostrukturierte Felder in Form von computergenerierten Hologrammen (CGHs) 40 umfasst. Ein Ausschnitt aus einer solchen Inkrementalspur 18 ist in FIG 2 gezeigt. Für eine zeichnerisch einfache Darstellung ist diese in gerader Linie, also ohne eine Krümmung, wie sie sich bei einer auf einer Scheibe 12 aufgebrachten Inkrementalspur 18 ergeben würde, gezeigt.

Erkennbar ist, dass die Inkrementalspur 18 eine alternierende Abfolge von jeweils paarig zusammengehörigen, insbesondere gleich großen Feldern 42, 44 mit jeweils matrixartig angeordneten computergenerierten Hologrammen 40 umfasst. Jeweils ein Paar zusammengehöriger Felder 42, 44 stellt ein Inkrement der Maßverkörperung 14 dar. Dies ist in FIG 2 durch die Maßangabe 2n/N deutlich gemacht, wobei N die Anzahl der von der Inkrementalspur 18 umfassten Inkremente bezeichnet.

Eine solche Inkrementalspur 18 mit computergenerierten Hologrammen 40 wird im Betrieb des Messwertgebers 10 mit einem Abtaststrahl 28 (FIG 1) abgetastet und FIG 2 zeigt insoweit den normalerweise kreisförmigen oder zumindest im Wesentlichen kreisförmigen Aufreffbereich des Abtaststrahls 28 auf der Inkrementalspur 18.

Bei der in FIG 2 gezeigten Situation liegt der Durchmesser eines von der Sende- / Empfangseinheit, nämlich dem jeweiligen Sender 20, 22, insbesondere dem zum Inkrementalkanal gehörenden Sender 22, ausgehenden Abtaststrahls 28 im Bereich einer in Bewegungsrichtung (B) der Inkrementalspur 18 gemessenen Dimension eines der vier gezeigten Felder 42, 44. Bezogen auf die jeweils paarig zusammengehörigen Felder 42, 44 entspricht der Durchmesser des Auftreffbereichs einer hälftigen Dimension eines solchen Feldpaars 42, 44. Wenn man die in Bewegungsrichtung (B) gemessene Dimension eines solchen Feldpaars 42, 44 - also eines Inkrements der Maßverkörperung - als Längserstreckung auffasst, liegt der Durchmesser des Abtaststrahls 28 im Bereich einer hälftigen solchen Längserstreckung. Dies führt dazu, dass der Abtaststrahl 28 zu bestimmten Zeitpunkten jeweils genau eines der Felder 42, 44 mit deren CGHs 40 erfasst.

In FIG 2 ist des Weiteren erkennbar, dass die Felder 42, 44 aus unterschiedlichen CGHs 40 aufgebaut sind. Einzelne CGHs 40 sind mit der Ziffer "1" bezeichnet, andere CGHs 40 sind mit der Ziffer "0" bezeichnet. Die mit der Ziffer "1" bezeichneten CGHs 40 werden im Folgenden kurz CGH1 und entsprechend die mit der Ziffer "0" bezeichneten CGHs 40 kurz CGH0 genannt.

In dem Bereich der für die Auswertung herangezogenen Bildebene, also insbesondere auf der Oberfläche des jeweiligen Detektors 24, 26, insbesondere des zum Inkrementalkanal gehörenden Detektors 26, erzeugt der Abtaststrahl 28 ein Beugungsmuster mit einzelnen sogenannten Spots entsprechend den im Auftreffbereich erfassten computergenerierten Hologrammen 40. Ein computergeneriertes Hologramm vom Typ CGH1 erzeugt dabei in der Bildebene einen ersten Spot mit relativ hoher Lichtintensität und außerhalb dieses ersten Spots einen Bereich mit vergleichsweise kleiner Lichtintensität,während ein computergeneriertes Hologramm vom Typ CGH0 in der Bildebene einen zweiten Spot mit relativ geringer Lichtintensität und auch außerhalb dieses zweiten Spots einen Bereich mit relativ geringer Lichtintensität erzeugt. Ein CGH0 ist demnach ein computergeneriertes Hologramm 40, welches das Codewort "0" erzeugt. Entsprechend ist ein CGH1 ein computergeneriertes Hologramm 40, welches das Codewort "1" erzeugt. Die computergenerierten Hologramme 40 vom Typ CGH1 sind dabei untereinander nicht notwendig alle vollkommen identisch, sondern in vielen Fällen nur ähnlich. Gleiches gilt für die computergenerierten Hologramme 40 vom Typ CGH0.

Das in FIG 2 dargestellte Szenario ist nur als Beispiel aufzufassen und grundsätzlich kann jedes Feld 42, 44, das hier als 6x8 Matrix mit jeweils einzelnen, gleichartigen CGHs 40 dargestellt ist, mehr oder weniger Zeilen und/oder Spalten aufweisen. Insofern ist auch denkbar, dass jedes Feld 42, 44 mit nur einem, entsprechend größeren computergenerierten Hologramm 40 gebildet ist.

Wenn der Durchmesser des Auftreffbereichs des Abtaststahls 28 in etwa so groß wie ein halbes Inkrement ist, wie dies in FIG 2 gezeigt ist, ergibt sich bei einer gleichförmigen Bewegung der Maßverkörperung 14 - also bei der Darstellung in FIG 2 einer gleichförmigen Bewegung des Auftreffbereichs in horizontaler Richtung - ein periodisches Signal, das als Inkrementalinformation auswertbar ist.

Anstelle eines kreisförmigen Auftreffbereichs ist auch ein rechteckiger oder im Wesentlichen rechteckiger Auftreffbereich denkbar. Durch eine solche Optimierung der Form des Auftreffbereichs, etwa durch eine enstprechend geformte Blende 30, kann die Form des resultierenden, periodischen Signals verbessert werden, insbesondere so verbessert werden, dass sich das Signal einer idealen Sinusform annähert. Die Form des Auftreffbereichs bestimmt nämlich die jeweils erzeugten Beugungsmuster. Jedes im Auftreffbereich vom Abtaststrahl 28 erfasste computergenerierte Hologramm 40 erzeugt in der Bildebene ein Beugungsmuster. Demnach kann man sich die Erfassung eines computergenerierten Hologramms 40 im Auftreffbereich gleichsam als dessen Aktivierung vorstellen. Bei einem rechteckigen Auftreffbereich ergibt sich eine sehr trennscharfe Aktivierung der computergenerierten Hologramme 40.

Während sich ein solcher rechteckiger Auftreffbereich grundsätzlich mit einer geeigneten Blende 30 erzeugen lässt, ist bei der Verwendung einer solchen Blende 30 problematisch, dass diese zur Erzeugung eines zur Ausrichtung der Felder 42, 44 passenden Auftreffbereichs selbst entsprechend ausgerichtet sein muss. Dies ist aufwendig und fehleranfällig. Zudem kann sich die Ausrichtung der Blende 30 während des Betriebs des Messwertgebers 10 ändern, insbesondere bei einer langen Betriebsdauer oder wenn der Messwertgeber 10 besonderen Belastungen, etwa Erschütterungen oder dauerhaften Rüttelbelastungen, ausgesetzt ist.

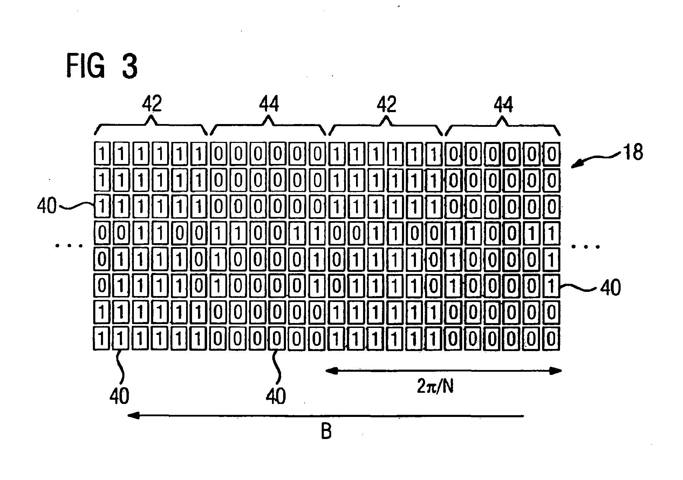

Eine Ausführungsform des Gebersystems sieht daher vor, dass die ansonsten mit einer Blende 30 oder dergleichen erreichbare Trennschärfe durch die computergenerierten Hologramme 40 selbst erreicht wird. Dazu zeigt FIG 3 eine entsprechende Verteilung der computergenerierten Hologramme 40 in den einzelnen Feldern 42, 44. Jetzt teilt sich ein einem "Geberstrich" (Winkelbereich 2π/N) entsprechendes Feldpaar 42, 44 innerhalb einer Signalspur nicht mehr in zwei Bereiche auf, von denen der eine ausschließlich computergenerierte Hologramme 40 vom Typ CGH0 und der andere ausschließlich computergenerierte Hologramme 40 vom Typ CGH1 enthält. Zwar gibt es nun immer noch zwei gleich große Felder 42, 44, aber das Mischungsverhältnis der beiden CGH-Typen ist nun nicht mehr konstant 0:1 oder 1:0 innerhalb je eines Feldes 42, 44, sondern abhängig von der in Bewegungsrichtung betrachteten Position.

Konkret ist das Mischungsverhältnis der computergenerierten Hologramme 40 vom Typ CGH0 und vom Typ CGH1 in der Mitte oder einem mittleren Abschnitt (bei der dargestellten Situation entspricht ein solcher mittlerer Abschnitt den "Spalten" drei und vier) eines jeden Felds 42, 44 gleich 0:1 oder 1:0 oder zumindest im Wesentlichen 0:1 oder 1:0. Jedes Feld 42, 44 umfasst also in einem mittleren Abschnitt ausschließlich oder zumindest mehrheitlich nur computergenerierte Hologramme 40 des ersten Typs (CGHO) oder des zweiten Typs (CGH1). Zu den Rändern ("Spalten" eins und zwei oder "Spalten" fünf und sechs) nähert sich die Verteilung der beiden CGH-Typen einem Verhältnis von 1:1 oder entspricht 1:1. In den beiden in Bewegungsrichtung der Maßverkörperung 14 vor bzw. hinter dem eben beschriebenen mittleren Abschnitt liegenden Abschnitten (seitlichen Abschnitten) umfasst jedes Feld 42, 44 demnach eine gleiche oder annähernd gleiche Anzahl der computergenerierten Hologramme 40 des ersten Typs (CGHO) und des zweiten Typs (CGH1).

Durch eine geeignete Wahl dieses Mischungsverhältnisses als Funktion von der Position lässt sich die Sinusförmigkeit der Spursignale gezielt verbessern. Es besteht die Erwartung, dass mit einer solchen Verteilung der computergenerierten Hologramme 40 auf eine speziell geformte und exakt auszurichtende Blende 30 zur Erreichung einer guten Sinusförmigkeit verzichtet werden und stattdessen eine einfache Blende 30 verwendet werden oder auf eine Blende verzichtet werden kann. Eine solche Verteilung der computergenerierten Hologramme 40 wird entsprechend auch als Optimierung der CGHs bzw. Optimierung der CGHs mit gleichzeitiger Optimierung einer geeigneten Verteilung im Hinblick auf eine möglichst gute Approximation eines idealen sinusförmigen Signals bezeichnet.

FIG 3 zeigt nur eine Möglichkeit zur möglichst guten Approximation eines vorgegebenen, insbesondere idealen sinusförmigen Verlaufs. Alternativ lässt sich das auch wie folgt erreichen: Unabhängig von der Unterteilung der Felder (oder übergeordneten CGHs) 42, 44 in mehrere (Sub-)CGHs kann die Optimierung auch so ausgeführt werden, dass nicht nur jedes Feld für sich ein gewünschtes Beugungsmuster möglichst gut realisiert, sondern dass zusätzlich beim Übergang von einem Feld auf das nächste ein vorgegebener, insbesondere idealer sinusförmiger Verlauf für die Intensität des Beugungsmusters an bestimmten Orten möglichst gut approximiert wird.

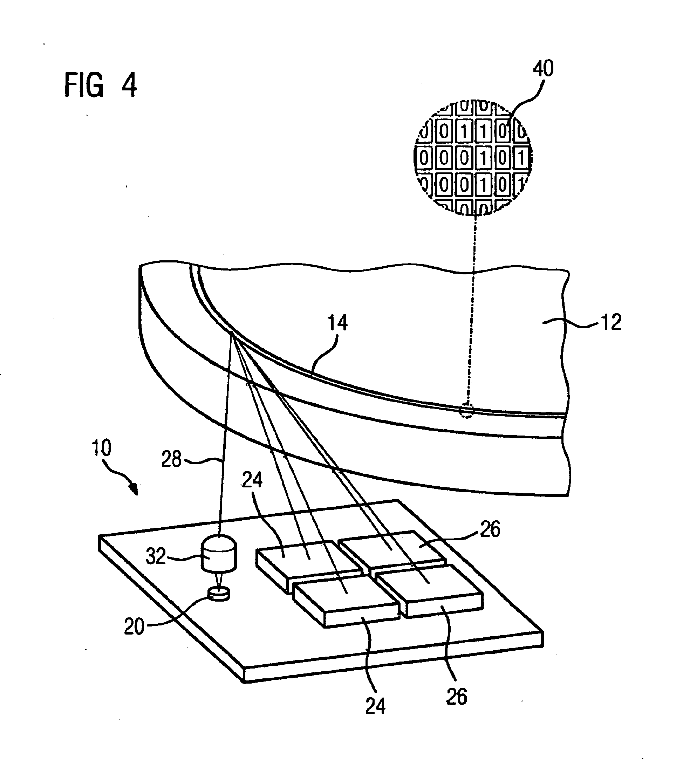

FIG 4 zeigt eine andere und im Vergleich zu FIG 1 nochmals vereinfachte Darstellung von Teilen eines Messwertgebers 10. Der Messwertgeber 10 umfasst einen Sender 20, nämlich insbesondere eine Laserdiode und eine Mehrzahl von Detektoren 24, 26. Die Maßverkörperung 14 auf der nur teilweise gezeigten und im Betrieb rotierenden Scheibe 12 umfasst computergenerierte Hologramme 40, wie die Ausschnittsvergrößerung zeigt. Die Darstellung in FIG 4 will aber vor allem illustrieren, dass in einer Spur, zum Beispiel einer Inkrementalspur 18, jedes computergenerierte Hologramm 40 den Abtaststrahl 28 in mehrere Teilstrahlen mit unterschiedlichen Richtungen auffächert (Ablenkungs- und Auffächerungswirkung). Dies kann dazu führen, dass bei einer Abtastung einer Maßverkörperung 14 die Reflektion oder Transmission des Abtaststrahls 28 von verschiedenen Detektoren 24, 26 empfangen werden kann, genauer gesagt, dass die Reflektion oder Transmission des Abtaststrahls 28 von verschiedenen Detektoren 24, 26 empfangen werden kann. Damit entstehen an bestimmten Orten in der Bildebene höhere Lichtintensitäten. An diesen mit den computergenerierten Hologrammen 40 selbst festlegbaren Orten befinden sich die jeweiligen Detektoren 24, 26 zum Empfang und zur Auswertung des Beugungsmusters. Damit können sich unterschiedliche Strahlgänge ergeben, wie dies in FIG 4 exemplarisch für vier resultierende Strahlgänge gezeigt ist, die jeweils zu einem von vier Detektoren 24, 26 empfangbaren Beugungsmuster führen.

Auf Basis einer solchen Auffächerung des ursprünglichen Abtaststrahls 28 wird klar, dass bei einer Realisierung einer Inkrementalspur 18 mit computergenerierten Hologrammen 40 auch eine Zusammenfassung einer Absolutspur 16 und einer Inkrementalspur 18 möglich wird. Genauso lassen sich die normalerweise vier Inkrementalspuren, die im Folgenden entsprechend der jeweils erzeugten Inkrementalsignale auch als A-Spur, *A-Spur, B-Spur und *B-Spur oder kurz als A, *A, B und *B bezeichnet werden, zusammenfassen.

Hinsichtlich der Möglichkeit zur Zusammenfassung von Inkrementalspuren kommt die Zusammenfassung aller Spuren (A, ,*A, B, *B) in einer Spur oder von jeweils zwei Spuren (A, B sowie *A, *B oder A, *A sowie B, *B oder A, *B sowie B, *A usw.) in einer Spur in Betracht. Durch die oben beschriebene Ablenkungs- und Auffächerungswirkung lässt sich erreichen, dass bei einem auf zum Beispiel eine einzelne Spur auftreffenden Abtaststrahl 28 dieser in vier Strahlen aufgefächert wird, wie dies in FIG 4 gezeigt wird, so dass anhand des dann mit jedem Detektor 24, 26 empfangenen Beugungsmusters ein jeweiliges Inkrementalsignal, also ein A, *A, B und *B-Signal, generiert werden kann.

Idealerweise gelten für die oben genannten Inkrementalsignale die Gleichungen

$$A = Am + A0 \sin (N \varphi), \quad {}^*A = Am - A0 \sin (N \varphi),$$

$$B = Am + A0 \cos (N \varphi), \quad *B = Am - A0 \cos (N \varphi),$$

wobei im Falle eines Drehgebers φ den Drehwinkel und N die Anzahl der Signalperioden pro Umdrehung (Strichzahl) bezeichnet. Die Signale *A und *B werden verwendet, um durch Differenzbildung A - *A bzw. B - *B mittelwertfreie Signale zu erhalten und eine robustere Signalübertragung realisieren zu können.

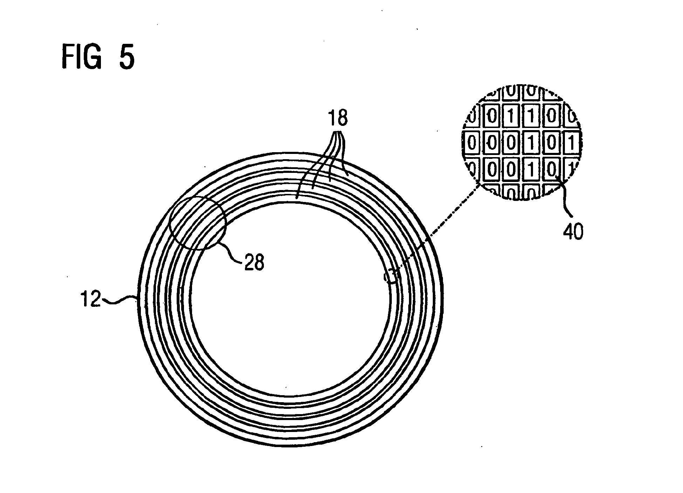

Bei einer Zusammenfassung einzelner Spuren lassen sich diese zudem beliebig verschachteln. FIG 5 zeigt dazu zunächst als Träger für eine Maßverkörperung 14 eine Scheibe 12 mit vier Inkrementalspuren 18. Die vier Inkrementalspuren 18 kommen für die Bildung der üblichen Signale A, *A, B, *B in Betracht und jede Inkrementalspur 18 umfasst mikrostrukturierte Felder in Form von computergenerierten Hologrammen 40, wie dies am Beispiel der Ausschnittsvergrößerung eines Abschnitts der inneren Inkrementalspur 18 dargestellt ist. Eine solche Anordnung und Abfolge mehrerer Inkrementalspuren 18 ist zwar möglich und sinnvoll, dennoch ist ein relativ großer, alle Inkrementalspuren 18 erfassender Auftreffbereich des Abtaststrahls 28 erforderlich. Wenn der Durchmesser des Auftreffbereichs des Abtaststrahls 28 gerade so groß ist, dass alle Spuren 18 erfasst werden, ist leicht vorstellbar, dass bereits eine geringe Fehljustierung entweder der Scheibe 12 oder des Senders 20 oder auch eine etwaige Exzentrizität der Scheibe 12 dazu führt, dass eines der in den "äußeren" Spuren 18 angelegten Signale nicht mehr oder nicht mehr ordnungsgemäß erzeugt werden kann.

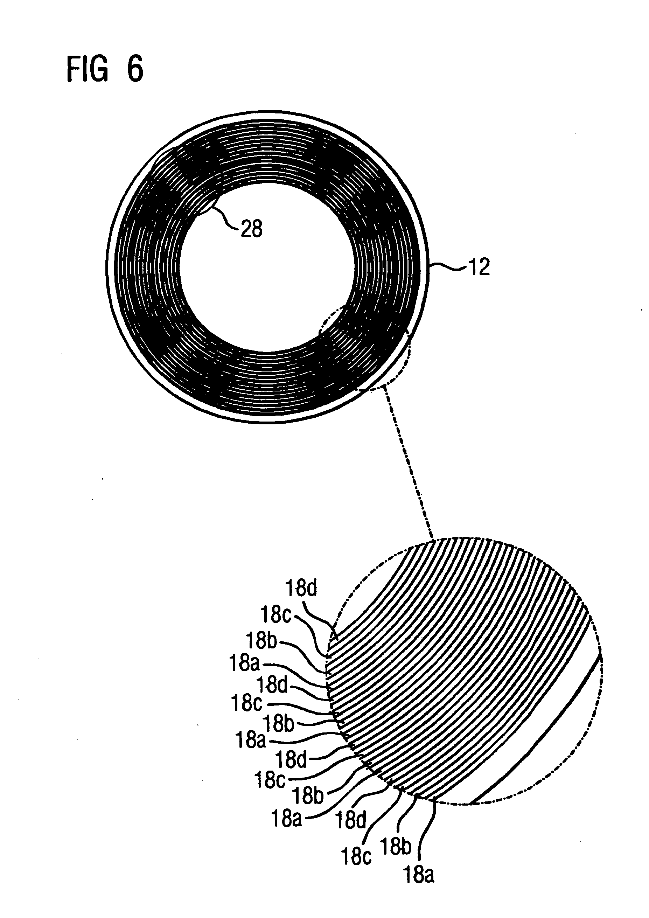

FIG 6 zeigt demgegenüber eine Situation, bei der die Breite jeder einzelnen Inkrementalspur 18 verringert ist und dementsprechend die Inkrementalspuren 18 ineinander verschachtelt sind, zum Beispiel in einer wie folgt gruppierten Abfolge: A, *A, B, *B; A, *A, B, *B; A, *A, B, *B und schließlich erneut A, *A, B, *B (zur Unterscheidung wie folgt mit 18a, 18b, 18c und 18d bezeichnet: A-Spur = 18a; *A-Spur = 18b; B-Spur = 18c; *B-Spur 18d). Hier hätte eine Verschiebung des Auftreffbereichs des Abtaststrahls 28 kaum Auswirkungen auf die erzeugten Inkrementalsignale, so dass die Verlässlichkeit der mit den Inkrementalsignalen erhaltenen Positionsinformation deutlich erhöht ist. In FIG 6 ist dazu zur Illustration der Auftreffbereich des Abtaststrahls 28 drastisch nach innen verschoben gezeigt. Auch bei einer solchen, im praktischen Einsatz normalerweise nicht zu besorgenden Verschiebung, könnten immer noch alle Inkrementalsignale A, *A, B, *B, wenn auch auf Basis einer gegebenenfalls verringerten Intensität der jeweiligen Beugungsmuster, erzeugt werden. Erforderlich ist also im Grunde nur, dass der Abtaststrahl 28 zumindest eine der in der Maßverkörperung gebildeten Gruppen von ineinander verschachtelten Inkrementalspuren 18 erfasst.

Im Gegensatz zur bisher erörterten Information über die Winkelposition (Inkrementalinformation) kann mit computergenerierten Hologrammen 40 auch die radiale Position auf der Scheibe 12 kodiert werden. Diese kann bei rotatorischen Gebern von Interesse sein, um eine Exzentrizität der Scheibe 12 zu erfassen und gegebenenfalls sogar einen daraus resultierenden Lagefehler zu kompensieren. Eine entsprechende Erfassungs- und Korrekturmöglichkeit besteht grundsätzlich auch bei einem Lineargeber.

Im Gegensatz zur Inkrementalinformation bezieht sich die Radiusinformation auf eine Größe, die sich nur über einen endlichen Bereich erstreckt, der typischerweise wenige Zehntel Millimeter bis vielleicht wenige Millimeter beträgt. Insofern ist hier eine Darstellung dieser Information als sin / cos-Signal nicht so naheliegend wie bei der Winkelinformation, hat aber auch hier ihre Vorteile.

Wie bei der Inkrementalinformation sind auch hier wieder getrennte Spuren für Radius- und Winkelinformation (= Inkremental- und Absolutinformation) oder eine Zusammenfassung solcher Spuren in einer Spur möglich. Im Vergleich zu den in FIG 6 dargestellten und den im Zusammenhang mit der Beschreibung von FIG 6 erläuterten Möglichkeiten erhöht sich nun allerdings die Anzahl der Möglichkeiten zur Zusammenfassung der jeweiligen Spuren. Selbst wenn außer Acht gelassen wird, dass für die Inkrementalinformationen in der Maßverkörperung bis zu vier Spuren angelegt sind, ergibt sich die erhöhte Anzahl der Kombinationsmöglichkeiten immer noch aus der Tatsache, dass nunmehr drei Informationen zu kodieren sind, nämlich Radius-, Inkremental- und Absolutinformation.

Als Analogsignale für die Radiusinformation eignen sich entsprechend dem oben Gesagten z.B.

$$Ar = Arm + Ar0 \sin (N \varphi r), \quad *Ar = Arm - Ar0 \sin (N \varphi r),$$

$$Br = Arm + Ar0 \cos (N \varphi r), \quad *Br = Arm - Ar0 \cos (N \varphi r)$$

mit

$$\varphi r = 2\,\pi\,(r - rmin)\ /\ (rmax - rmin),$$

wobei r die radiale Position und rmin, rmax die Grenzen des dafür zu erfassenden Bereichs bedeuten.

In Erweiterung des Gedankens zur zusätzlichen Erfassung einer radialen Position, die nur auf einen relativ schmalen Bereich beschränkt ist, ist nach dem gleichen Prinzip auch ganz allgemein die Erfassung einer Position in zwei Dimensionen möglich. Auch dabei lassen sich zusätzlich zur Erfassung einer inkrementellen Positionsinformation in einer der beiden Dimensionen oder in beiden Dimensionen eine absolute Positionsinformation erfassen.

Möglicherweise weichen die Analogsignale für die Inkrementalsignale und/oder Radiussignale von ihrer Idealform (z.B. sin/cos) in Abhängigkeit von der Absolutposition ab. Solche Abweichungen können über entsprechende positionsabhängige Entzerrungskennlinien (realisiert z.B. durch eine programmierbare und in der Auswerteelektronik 34 implementierte Logik für die A/D-gewandelten Signalwerte) kompensiert werden. Entsprechend können auch etwaige (zusätzliche) andere störende Einflüsse zwischen Inkremental-, Radius- und Absolutsignalen kompensiert werden.

Insgesamt ist damit jetzt auch klar, dass mit dem in FIG 4 gezeigten Messwertgeber 10, bei dem zunächst die Annahme nahe liegt, dass aufgrund des nur einfach ausgeführten Senders 20 nur ein Kanal, also zum Beispiel nur ein Absolutkanal oder nur ein Inkrementalkanal, realisiert ist, tatsächlich mit nur einem Sender 20 und einer eventuell nur eine Spur umfassenden Maßverkörperung ein Absolutkanal und Inkrementalkanal realisiert sein kann.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Insbesondere eignen sich alle hier vorgestellten Ansätze nicht nur für Drehgeber, sondern auch für Lineargeber und der entsprechend gewählte Gattungsbegriff Messwertgeber ist so zu verstehen, dass Drehgeber und Lineargeber umfasst sind.

Einzelne im Vordergrund stehende Aspekte der hier eingereichten Beschreibung lassen sich damit kurz wie folgt zusammenfassen:

Angegeben werden zum einen ein Messwertgeber (10) zum Erhalt einer Positionsinformation, wobei mit einer Sende- / Empfangseinheit eine Maßverkörperung (14) abgetastet wird und wobei die Maßverkörperung (14) diffraktiv wirkende mikrostrukturierte Felder umfasst, wobei sich der Messwertgeber (10) dadurch auszeichnet, dass die Maßverkörperung (14) zur Ableitung von Inkrementalsignalen zumindest eine Spur mit mikrostrukturierten Feldern in Form von computergenerierten Hologrammen (40) umfasst, und zum anderen die Verwendung von computergenerierten Hologrammen (40) als Basis für die Ableitung von Inkrementalsignalen.

## Patentansprüche

1. Messwertgeber (10) zum Erhalt einer Positionsinformation,
wobei mit einer Sende- / Empfangseinheit eine Maßverkörperung (14) abgetastet wird und wobei die Maßverkörperung (14) zur Ableitung von Inkrementalsignalen zumindest eine Spur mit mikrostrukturierten Feldern in Form von computergenerierten Hologrammen (40) umfasst,
wobei die Maßverkörperung (14) eine Spur mit einer alternierenden Abfolge von jeweils paarig zusammengehörigen Feldern (42, 44) mit computergenerierten Hologrammen (40) umfasst,
wobei jeweils ein Paar zusammengehöriger Felder (42, 44) ein Inkrement der Maßverkörperung (14) darstellt und wobei ein Durchmesser eines von der Sende- / Empfangseinheit ausgehenden Abtaststrahls (28) im Bereich einer in Bewegungsrichtung (B) der Maßverkörperung (14) gemessenen hälftigen Längserstreckung eines solchen Feldpaares (42, 44) liegt
**dadurch gekennzeichnet,**
**dass** die Verteilung und Anordnung der computergenerierten Hologramme (40) im Hinblick auf eine Approximation eines idealen sinusförmigen Inkrementalsignals optimiert sind,
**dass** jedes Feld (42, 44) eine Mehrzahl jeweils gleichartiger computergenerierter Hologramme (40) umfasst und
**dass** die computergenerierten Hologramme (40) entweder einem ersten oder einem zweiten Typ (CGHO, CGH1) zugehörig sind,
wobei jedes Feld (42, 44) eine Mehrzahl computergenerierter Hologramme (40) umfasst,
wobei jedes Feld (42, 44) in einem mittleren Abschnitt ausschließlich oder zumindest mehrheitlich computergenerierte Hologramme (40) des ersten Typs (CGH0) oder des zweiten Typs (CGH1)umfasst und
wobei in jeweils einem in Bewegungsrichtung (B) der Maßverkörperung (14) vor bzw. hinter dem mittleren Abschnitt liegenden Abschnitt sich eine Verteilung der computergenerierten Hologramme (40) des ersten Typs (CGHO) und des zweiten Typs (CGH1)einem 1:1-Verhältnis nähert oder entspricht.

2. Messwertgeber nach Anspruch 1, mit einer Optik (30, 32) zur Beeinflussung eines von der Sende- / Empfangseinheit ausgehenden Abtaststrahls (28) im Hinblick auf eine möglichst gute Approximation eines idealen sinusförmigen Signals.

3. Messwertgeber nach Anspruch 1 oder 2, wobei die Maßverkörperung (14) computergenerierte Hologramme (40) zur Erfassung einer radialen Position und/oder zur Erfassung einer Position in zwei Dimensionen umfasst.

4. Messwertgeber nach einem der vorangehenden Ansprüche, wobei die Maßverkörperung (14) zumindest vier Spuren (16, 18) mit computergenerierten Hologrammen (40) umfasst.

5. Messwertgeber nach Anspruch 4, wobei die Maßverkörperung (14) eine Mehrzahl von jeweils radial angeordneten Gruppen mit zumindest vier Spuren (16, 18) mit computergenerierten Hologrammen (40) umfasst.

6. Messwertgeber nach einem der Ansprüche 4 oder 5, mit zumindest zwei von der Sende- / Empfangseinheit generierten Abtaststrahlen (28), wobei jeder Abtaststrahl (28) zumindest eine Spur (16, 18) mit computergenerierten Hologrammen (40) erfasst.

7. Messwertgeber nach einem der vorangehenden Ansprüche, wobei in einer Spur mit computergenerierten Hologrammen (40) zumindest zwei periodische Signale, insbesondere genau zwei periodische Signale oder genau vier periodische Signale, kodiert sind


## Claims

1. Data encoder (10) for receiving position information,
wherein a measuring element (14) is sampled with a transceiver unit and wherein the measuring element (14), for derivation of incremental signals, has at least one track with microstructured fields in the form of computer-generated holograms (40),
wherein the measuring element (14) has a track with an alternating sequence of pairs of fields (42, 44) belonging together in each case with computer-generated holograms (40),
wherein a pair of respective associated fields (42, 44) represents an increment of the measuring element (14) and wherein a diameter of a sampling beam (28) emanating from the transceiver unit lies in the range of half a longitudinal extent of such a field pair (42, 44) measured in a direction of movement (B) of the measuring element (14),
**characterised in that**,
the distribution and arrangement of the computer-generated holograms (40) are optimised in respect of an approximation of an ideal sine-wave incremental signal,
each field (42, 44) comprises a plurality of similar computer-generated holograms (40) in each case and
the computer-generated holograms (40) belong to either a first or a second type (CGH0, CGH1),
wherein each field (42, 44) comprises a plurality of computer-generated holograms (40),
wherein each field (42, 44), in a central section, exclusively or at least largely comprises computer-generated holograms (40) of the first type (CGH0) or of the second type (CGH1) and
wherein, in a section lying before or after the central section in the direction of movement (B) of the measuring element (14) respectively, a distribution of the computer-generated holograms (40) of the first type (CGH0) and the second type (CGH1) approximates or corresponds to a 1:1 ratio.

2. Data encoder according to claim 1, with optics (30, 32) for influencing a sampling beam (28) emanating from the transceiver unit in respect of a best possible approximation of an ideal sine-wave signal.

3. Data encoder according to claim 1 or 2, wherein the measuring element (14) includes computer-generated holograms (40) for detecting a radial position and/or for detecting a position in two dimensions.

4. Data encoder according to one of the preceding claims, wherein the measuring element (14) includes at least four tracks (16, 18) with computer-generated holograms (40).

5. Data encoder according to claim 4, wherein the measuring element (14) includes a plurality of groups disposed radially in each case with at least four tracks (16, 18) with computer-generated holograms (40).

6. Data encoder according to one of claims 4 or 5, with at least two sampling beams (28) generated by the transceiver unit, wherein each sampling beam (28) detects at least one track (16, 18) with computer-generated holograms (40).

7. Data encoder according to one of the preceding claims, wherein at least two periodic signals, especially exactly two periodic signals or exactly four periodic signals, are encoded in a track with computer-generated holograms (40).

**Revendications**

1. Capteur ( 10 ) de valeur de mesure pour l'obtention d'une information de position,
dans lequel une matérialisation ( 14 ) de mesure est échantillonnée par une unité d'émission/réception et la matérialisation ( 14 ) de mesure comprend pour la dérivation de signaux incrémentaux au moins une trace ayant une succession alternée de champs ( 42 , 44 ) appariés respectivement par paires et ayant des hologrammes ( 40 ) produits par ordinateur,
dans lequel respectivement une paire de champs ( 42 , 44 ) appariés représente un incrément de la matérialisation ( 14 ) de mesure et un diamètre d'un faisceau ( 28 ) d'échantillonnage émis par l'unité d'émission/réception se trouve dans la plage d'une moitié d'étendue en longueur, mesurée dans la direction ( B ) de déplacement de la matérialisation ( 14 ) de mesure, d'une paire ( 42 , 44 ) de champs de ce genre,
**caractérisé**
**en ce que** la répartition et l'agencement des hologrammes ( 40 ) produits par ordinateur sont optimisés en vue d'une approximation d'un signal incrémental sinusoïdal idéal,
**en ce que** chaque champ ( 42 , 44 ) comprend une multiplicité d'hologrammes ( 40 ) produits par ordinateur respectivement de même type, et
**en ce que** les hologrammes ( 40 ) produits par ordinateur appartiennent à un premier ou à un deuxième type ( CGH0, CGH1 )
dans lequel chaque champ ( 42 , 44 ) comprend une multiplicité d'hologrammes ( 40 ) produits par ordinateur,
dans lequel chaque champ ( 42 , 44 ) comprend dans une partie médiane, exclusivement ou au moins majoritairement, des hologrammes ( 40 ) produits par ordinateur du premier type ( CGH0 ) ou du deuxième type ( CGH1 ) et dans lequel dans une partie se trouvant, dans la direction ( B ) de déplacement de la matérialisation ( 14 ) de mesure, avant ou derrière la partie médiane, une répartition des hologrammes ( 40 ) produits par ordinateur du premier type ( CGH0 ) et du deuxième type ( CGH1 ) se rapproche d'un rapport 1 :1 ou y correspond.

2. Capteur de valeur de mesure suivant la revendication 1, comprenant une optique ( 30 , 32 ) pour influencer un faisceau ( 28 ) d'échantillonnage émis par l'unité d'émission/réception en vue d'une approximation la meilleure possible d'un signal sinusoïdal idéal.

3. Capteur de valeur de mesure suivant la revendication 1 ou 2, dans lequel la matérialisation ( 14 ) de mesure comprend des hologrammes ( 40 ) produits par ordinateur pour la détection d'une position radiale et/ou pour la détection d'une position en deux dimensions.

4. Capteur de valeur de mesure suivant l'une des revendications précédentes, dans lequel la matérialisation ( 14 ) de mesure comprend au moins quatre traces ( 16 , 18 ) ayant des hologrammes ( 40 ) produits par ordinateur.

5. Capteur de valeur de mesure suivant la revendication 4, dans lequel la matérialisation ( 14 ) de mesure comprend une multiplicité de groupes disposés respectivement radialement et ayant au moins quatre traces ( 16 , 18 ) ayant des hologrammes ( 40 ) produits par ordinateur.

6. Capteur de valeur de mesure suivant l'une des1 revendications 4 ou 5, ayant au moins deux faisceaux ( 28 ) d'échantillonnage produits par l'unité d'émission/réception, chaque faisceau ( 28 ) d'échantillonnage détectant au moins une trace ( 16 , 18 ) ayant des hologrammes ( 40 ) produits par ordinateur.

7. Capteur de valeur de mesure suivant l'une des revendications précédentes, dans lequel dans une trace ayant des hologrammes ( 40 ) produits par ordinateur sont codés au moins deux signaux périodiques, notamment exactement deux signaux périodiques ou exactement quatre signaux périodiques.

FIG 1

EP 2 650 655 B1

# FIG 2

## FIG 3

FIG 4

FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1677081 B1
- DE 102006009747 A
- DE 102004002683 A

**In der Beschreibung aufgeführte Nicht-Patentliteratur**

- **DAVID HOPP et al.** Absolutkodierung für einen diffraktiven optischen Drehgeber. *DGaO Proceedings,* 2011